# EUROPÄISCHE PATENTSCHRIFT

(11) **EP 1 764 176 B1**
(45) Veröffentlichungstag und Bekanntmachung des Hinweises auf die Patenterteilung: **24.08.2011**
(21) Anmeldenummer: 06018762.2
(22) Anmeldetag: 07.09.2006
(51) Int. Cl.: B23C 5/10

(54) **Fräswerkzeug**
Milling Tool
Fraise

(30) Priorität: 14.09.2005 DE 102005044015
(43) Veröffentlichungstag der Anmeldung: 21.03.2007
(73) Patentinhaber: Jakob Lach GmbH & Co. KG, 63452 Hanau (DE)
(72) Erfinder: Maurer, Eugen, 61239 Ober-Mörlen (DE)
(74) Vertreter: Jochem, Bernd

(56) Entgegenhaltungen:
- US-A- 5 193 944
- US-A- 5 272 940

## Beschreibung

Die Erfindung betrifft ein rotierend antreibbares Fräswerkzeug mit einem Trägerkörper gemäß dem Oberbegriff von unabhängigen Anspruch 1 der am Umfang mit einer Vielzahl von plattenförmig ausgebildeten, aus einem Schneidstoff härter als Hartmetall bestehenden Schneidkörpern bestückt ist, bei denen jeweils der vorauseilende Bereich der radial äußeren Umfangskante die Schneidkante, die angrenzende Seitenfläche die Spanfläche mit einem negativen Spanwinkel und die der Grundfläche gegenüberliegende Oberfläche die Freifläche bilden. Ein solches Fräswerkzeug ist der US 5 272 940 zu entnehmen.

Ein ähnliches Fräswerkzeug ist aus der DE 38 28 746 C1 bekannt. Sie beschreibt einen Scheibenfräser mit Ausnehmungen am Umfang, in denen nicht näher beschriebene plattenförmige Schneidkörper mittels stirnseitig am scheibenförmigen Trägerkörper angeschraubter Kassetten angebracht sind. Diese Art der Befestigung der Schneidkörper ist auf Scheibenfräser beschränkt und kommt für eine Bestückung eines Schaftfräsers mit einer Vielzahl von axial nebeneinander angeordneten Schneidkörpern nicht in Frage. Außerdem sind die Kassetten kostenaufwendig und beanspruchen viel Raum, so daß die Schneidkörper nur mit verhältnismäßig großem Zwischenabstand angeordnet werden können.

Es gibt viele Werkstücke, die maschinell bearbeitet werden müssen, aber aus Materialien, wie z. B. glas- oder kohlefaserverstärkten Kunststoffen, Laminaten, Composit-Materialien, Graphit oder mineralischen Baumaterialien bestehen, an denen Werkzeugschneidkanten schnell stumpf werden. Gleiches gilt z. B. auch für die Bearbeitung von Keramik- und Hartmetallgrünlingen. In diesen Fällen sind Hartmetallwerkzeuge wegen zu kurzer Standzeiten ungeeignet. Werkzeuge nach Art von Schleifscheiben mit galvanisch gebundenen, am Umfang gestreut angeordneten kleinen Diamantkörnern haben den Nachteil, daß der Schleifstaub die Spanräume zusetzt und es dann zur Erhitzung und Zerstörung des Werkzeugs kommen kann.

Bei großen Bohrmaschinen, z. B. für den Offshore-Einsatz, sind am Umfang eines rotierend angetriebenen Trägerkörpers in Schräglage plattenförmige Schneidkörper aus polykristallinem Diamant angelötet, allerdings in der Weise, daß die Spanfläche jeweils durch die geglättete Oberfläche eines Schneidkörpers gebildet ist.

Der Erfindung liegt die Aufgabe zugrunde, ein Fräswerkzeug der eingangs genannten Art zu schaffen, welches ähnlich wie ein Schleifwerkzeug mehr schlagend als schneidend funktioniert, um z. B. Kanten und Grate eines Werkstücks aus kohlefaserverstärktem Kunstharz, wie beispielsweise Teile eines Flugzeug-Leitwerks, zu glätten, verhältnismäßig einfach herzustellen ist und selbst unter schwierigen Einsatzbedingungen eine lange Standzeit hat.

Vorstehende Aufgabe wird erfindungsgemäß dadurch gelöst, daß die Schneidkörper mit ihrer Grundfläche jeweils auf der Endfläche von mit demjenigen Winkel zur kürzesten Verbindungslinie zwischen dem Mittelpunkt der Endfläche und der Mittellängsachse des Trägerkörpers ausgerichteten Sackbohrungen in dessen Umfangsfläche befestigt sind, daß die an die Schneidkante angrenzende Seitenfläche den vorbestimmten Spanwinkel bildet.

Das vorgeschlagene Fräswerkzeug kann einen sehr einfachen Aufbau haben, weil die plattenförmigen Schneidkörper zu ihrer Befestigung keiner Kassetten oder Klemmeinrichtung bedürfen. Vorzugsweise werden sie einfach auf den Trägerkörper aufgeklebt oder aufgelötet. Der Vorteil der Einfachheit wirkt sich besonders stark aus, weil die Tendenz besteht, eine verhältnismäßig große Zahl von z. B. 36, aber auch wesentlich mehr, relativ kleinen Schneidkörpern mit einem Umkreisdurchmesser von gegebenenfalls nur 2 bis 5 mm zu benutzen. Der negative Spanwinkel von z. B. -20° läßt eine kräftige Schneidkante von beispielsweise 90° zu, bei der keine Gefahr des Ausbruchs besteht. Vorzugsweise werden die plattenförmigen Schneidkörper aus polykristallinem Diamant, die im Ausgangszustand rund sind, einfach nur zu der gewünschten Kontur geschnitten, z. B. mittels elektroerosiver Verfahren, wobei die Seitenwände weiterhin senkrecht zu der Grundfläche und/oder der Oberfläche bleiben können. Man braucht also nur von den runden Platten einzelne Abschnitte gerade abzuschneiden, um fertige Schneidkörper zu erhalten. Im Einzelfall können sogar die handelsüblichen, runden, polykristallinen Schneidkörper in ihrer ursprünglich runden Form, also unbearbeitet als Schneidkörper verwendet werden.

Um bei derartigen Schneidkörpern mit im Querschnitt rechtwinkligen Schneidkanten einen negativen Spanwinkel zu erhalten, kann man die Grundfläche der Schneidkörper als Schrägfläche ausbilden und sie damit auf den Endflächen radial ausgerichteter Sackbohrungen befestigen. Vorgezogen wird jedoch eine Ausführung, bei der die plattenförmigen Schneidkörper an jeder Stelle ihrer Grundfläche dieselbe Höhe haben. Die Schräglage, entsprechend dem negativen Spanwinkel, wird in bevorzugter Ausgestaltung der Erfindung dadurch hergestellt, daß Sackbohrungen nicht genau radial, sondern mit Bezug auf die Drehachse (=Mittellängsachse) derart schräg zur radialen Richtung in die Umfangsfläche des Trägerkörpers gebohrt werden, daß die mit ihren Grundflächen auf den Endflächen der Sackbohrungen befestigten, gleichmäßig hohen Schneidkörper die richtige Schräglage für den genannten negativen Spanwinkel haben.

Der Durchmesser der Sackbohrungen sollte zweckmäßigerweise zum Umkreis der plattenförmigen Schneidkörper passen, nämlich nur um soviel größer sein, daß eine materialschlüssige Verbindung, z. B. Löt- oder Klebeverbindung, auch zwischen der Seitenwand der Schneidkörper und der Bohrungswand zustande kommt. Auf diese Weise gewinnt man eine noch festere Verbindung zwischen den Schneidkörpern und dem Trägerkörper. Bei ausreichend fester materialschlüssiger Verbindung zwischen den Schneidkörpern und dem Trägerkörper kann die Befestigung statt auf den Endflächen von Sachbohrungen auch auf z. B. durch Fräsen erzeugten Abflachungen einer zylindrischen Umfangsfläche des Trägerkörpers erfolgen.

Die Anordnung der Schneidkörper auf dem Umfang des Trägerkörpers erfolgt vorzugsweise in parallelen Reihen, die sich achsparallel oder schräg zur Drehachse des Trägerkörpers erstrecken können. Dabei sitzen die Schneidkörper in in Drehrichtung aufeinanderfolgenden Reihen auf Lücke versetzt. Die Lücke zwischen zwei in derselben Reihe benachbarten Schneidkörpern kann z. B. durch einen Schneidkörper der nächstfolgenden Reihe oder durch je einen Schneidkörper der zwei oder drei nachfolgenden Reihen geschlossen bzw. überbrückt werden.

Ausführungsbeispiele der Erfindung werden nachstehend anhand der Zeichnung näher erläutert. Es zeigen:
- Fig. 1: eine Seitenansicht eines Vielzahn-Schaftfräsers gemäß der Erfindung;
- Fig. 2: eine perspektivische Ansicht eines Fräswerkzeugs nach Fig. 1 mit zusätzlichen Bohrschneiden;
- Fig. 3: eine perspektivische Ansicht eines der am Umfang des Fräswerkzeugs angelöteten Schneidkörper;
- Fig. 4: als Einzelheit "B" aus Fig. 1 in größerem Maßstab eine Draufsicht auf einen angelöteten Schneidkörper nach Fig. 3 und die ihn aufnehmende Sackbohrung in der Umfangsfläche des Schaftfräsers;
- Fig. 5: einen Querschnitt durch das Fräswerkzeug nach Schnittlinie G-G in Fig. 1 im Bereich eines der Schneidkörper.

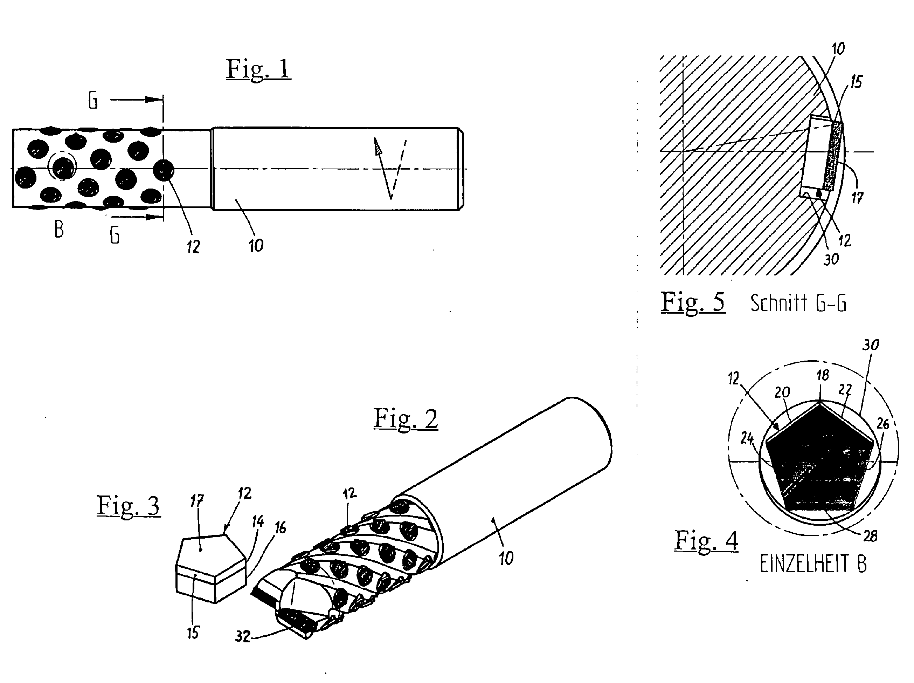

Das in Fig. 1 und 2 gezeigte Vielzahn-Fräswerkzeug hat die Form eines Schaftfräsers, bestehend aus einem stufenförmig abgesetzten, zylindrischen Trägerkörper 10, der auf einem vorderen Abschnitt am Umfang mit Schneidkörpern 12 bestückt ist. Einer der Schneidkörper ist in perspektivischer Ansicht in Fig. 3 und in Draufsicht in Fig. 4 dargestellt. Er hat gemäß Fig. 3 einen zweischichtigen Aufbau mit einer oberen Schicht 14 aus polykristallinem Diamant (PKD) und einer unteren Schicht 16 aus Hartmetall. Anstelle von PKD könnte die obere Schicht 14 auch aus einem anderen extrem harten Schneidstoff, z. B. kubischem Bornitrid (CBN), bestehen. Die beiden Schichten 14, 16 werden im Herstellungsprozeß fest miteinander versintert, so daß sie sich wie ein einstückiges Teil verhalten. Die Schneidkörper 12 sind verhältnismäßig preiswert in kreisrunder Form im Handel erhältlich und werden von der Werkzeugindustrie auf die jeweils gewünschte Form bzw. Kontur geschnitten. Dabei bedient man sich vorzugsweise elektroerosiver Schneidverfahren, z. B. mit einem Draht als schneidende Elektrode. Die von vornherein polierte Oberfläche 17 der PKD- oder CBN-Schicht 14, die üblicherweise bei anderen Dreh- und Fräswerkzeugen als Spanfläche dient, braucht dabei nicht weiter bearbeitet zu werden.

Bei der gezeigten Ausführung ist, ausgehend von einem handelsüblichen, kreisrunden, zweischichtigen Schneidkörper 12 durch 5 gerade, senkrecht zur polierten Oberfläche und zur unteren Grundfläche ausgeführte Schnitte gemäß Fig. 3 ein regelmäßiges Fünfeck hergestellt worden. Dieses hat im Beispielsfall einen Umkreis mit einem Durchmesser von 3,71 mm. Jeder der Schneidkörper 12 wird mit einer solchen Ausrichtung zur Drehachse des Fräswerkzeugs auf dem Umfang des Trägerkörpers 10 angeklebt oder angelötet, daß gemäß Fig. 2 eine der fünf Ecken in diejenige Umfangsrichtung weist, in die sich die Schneidkörper 12 durch den motorischen Drehantrieb des Fräswerkzeugs bei der Bearbeitung bewegen. In der Ansicht nach Fig. 4 ist die vorauseilende Ecke des Schneidkörpers mit 18 bezeichnet. Die beiden sich an der Ecke 18 treffenden, oberen, geraden Randkanten 20, 22 sind während der Bearbeitung eines Werkstücks die Schneidkanten des dargestellten Schneidkörpers 12. Sie erstrecken sich zusammen über die größte Breite (gemessen parallel zur Drehachse des Fräswerkzeugs) des Schneidkörpers 12. Da die sich in Drehrichtung nach hinten anschließenden beiden geraden Randkantenabschnitte 24, 26 einen spitzen Winkel einschließen, sich also der Schneidkörper 12 nach hinten verjüngt, kommen diese Kanten 24, 26 bei der Bearbeitung eines Werkstücks nicht mehr zum Einsatz. Sie könnten daher, wenn man sich nach Verschleiß der Schneidkanten 20, 22 dazu entschließt, die Schneidkörper 12 vom Trägerkörper 10 zu lösen und in gedrehter Stellung wieder fest anzulöten bzw. anzukleben, einzeln oder zusammen mit der jetzt noch hintersten Umfangskante 28 als Schneidkanten zum Einsatz kommen.

Es versteht sich, daß die plattenförmigen Schneidkörper 12 in Draufsicht auch z. B. die Form eines regelmäßigen Siebenecks oder Neunecks oder eine dreieckige Form haben können. Grundsätzlich sind auch regelmäßige oder unregelmäßige viereckige oder andere polygonale Formen mit einer geradzahligen Anzahl von Ecken nicht ausgeschlossen. Bei bestimmten Anwendungen braucht man die handelsüblichen runden Schneidkörper 12, die es mit verschiedenen Durchmessern und Schichtdicken der PKD- bzw. CBN-Schicht gibt, überhaupt nicht zu bearbeiten, sondern kann diese unmittelbar am Umfang des Trägerkörpers 10 derart befestigen, daß die polierte Oberseite die Außenseite und Freifläche bildet.

Um die Grundfläche der Schneidkörper 12 nicht mit einer Krümmung bearbeiten zu müssen, dennoch aber eine große Befestigungsfläche auf dem Umfang des Trägerkörpers 10 zu erhalten, werden die Schneidkörper 12 auf der ebenen Endfläche flacher Sackbohrungen in der Umfangsfläche des Trägerkörpers 10 durch Löten oder Kleben befestigt. Der Durchmesser der in Fig. 4 mit 30 bezeichneten Löcher ist zweckmäßigerweise nur etwa 2/10 bis 3/10 mm größer als der Umkreis der Schneidkörper 12. Auf diese Weise kommt es auch zu einer materialschlüssigen Verbindung zwischen dem Schneidkörper 12 und der zylindrischen Wand der Bohrung 30. Im Falle einer polygonalen Grundfläche der Schneidkörper 12 kann aber auch eine engere Passung zwischen dem Umkreis der Schneidkörper 12 und der Bohrung 30 gewählt werden, so daß die Schneidkörper 12 am Umfang formschlüssig in der Bohrung 30 sitzen.

In der bevorzugten Ausführung bildet die polierte Oberfläche der Schneidkörper 12 an den Schneidkanten 20, 22 einen rechten Winkel mit den zugeordneten Seitenflächen 15 der Schneidkörper 12, wie dies in Fig. 5 gezeigt ist. Weiterhin ist erwünscht, daß die erfindungsgemäß als Freifläche fungierende polierte Oberseite 17 der Schneidkörper 12 gemäß Fig. 5 einen Freiwinkel von z. B. 15° bis 25°, im konkreten Fall vorzugsweise 20° bildet. Dementsprechend ist der von der Seitenfläche des Schneidkörpers 12 begrenzte Spanwinkel negativ mit einem Winkel von im Beispielsfall -20°.

Damit die Schneidkörper 12 die genannte Stellung haben, dürfen die Sackbohrungen 30 nicht genau radial in die Umfangsfläche des zylindrischen Trägerkörpers 10 eingebohrt werden, sondern derart, daß die Bohrungsachse sich mit Zwischenabstand zur Drehachse des Fräswerkzeugs erstreckt und die Tiefe der Sackbohrung an der Stelle, wo sich die vorauseilende Ecke 18 des Schneidkörpers 12 befindet, kleiner ist als auf der diametral gegenüberliegenden Seite im Bereich der Kante 28. Somit kann allein durch die Schräglage der Sackbohrungen 30 der negative Spanwinkel von z. B. 20° und der entsprechende Freiwinkel von 20° eingestellt werden. Es versteht sich, daß die Sackbohrungen 30 nur so tief ausgeführt zu werden brauchen, daß sich an ihrem Grund eine ebene Endfläche ergibt, auf der die im Beispielsfall prismatischen Schneidkörper 12 z. B. durch Löten oder Kleben oder in anderer geeigneter Weise befestigt werden können und sich die Schneidkanten 20, 22 soweit radial außerhalb der zylindrischen Umfangsfläche des Trägerkörpers 10 befinden, daß die Spanabfuhr an der Spanfläche 15 unproblematisch ist.

Der in Fig. 2 gezeigte Fräser entspricht dem Fräser nach Fig. 1, hat aber noch zusätzlich am vorderen Ende wenigstens eine Bohrschneide 32. Hier sind zwei Bohrschneiden 32 vorhanden, die aus PKD oder CBN bestehen und am Trägerkörper 10 angelötet oder angeklebt sind. Mit einem derartigen Fräser kann z. B. ein flaches Werkstück zunächst durchbohrt und dann von dem erzeugten Loch aus mittels der Schneidkörper 12 weiter bearbeitet werden.

Die Erfindung ist nicht auf Schaftfräser mit verhältnismäßig kleinem Durchmesser beschränkt, sondern auch für Scheibenfräser mit wesentlich größeren Durchmessern geeignet. Man wird normalerweise mit Umfangsgeschwindigkeiten an den Schneidkanten von z. B. 40 bis 60 m/Sekunde arbeiten. Grundsätzlich ist jedoch die Umfangsgeschwindigkeit bzw. Schnittgeschwindigkeit nach oben nicht begrenzt. Die Größe des Spanwinkels richtet sich nach den Zerspanungsbedingungen im Einzelfall.

## Patentansprüche

1. Rotierend antreibbares Fräswerkzeug mit einem Trägerkörper (10), der am Umfang mit einer Vielzahl von plattenförmig ausgebildeten, aus einem Schneidstoff härter als Hartmetall bestehenden Schneidkörpern (12) bestückt ist, bei denen jeweils der vorauseilende Bereich (18 - 22) der radial äußeren Umfangskante die Schneidkante, die angrenzende Seitenfläche (15) die Spanfläche mit einem negativen Spanwinkel und die der Grundfläche gegenüberliegende Oberfläche (17) die Freifläche bilden, **dadurch gekennzeichnet, daß** die Schneidkörper (12) mit ihrer Grundfläche jeweils auf der Endfläche von mit demjenigen Winkel zur kürzesten Verbindungslinie zwischen dem Mittelpunkt der Endfläche und der Mittellängsachse des Trägerkörpers (10) ausgerichteten Sackbohrungen (30) in dessen Umfangsfläche befestigt sind, daß die an die Schneidkante (18 - 22) angrenzende Seitenfläche (15) den vorbestimmten Spanwinkel bildet.

2. Fräswerkzeug nach Anspruch 1, **dadurch gekennzeichnet, daß** die plattenförmigen Schneidkörper (12) an jeder Stelle ihrer Grundfläche dieselbe Höhe haben und die Mittellängsachsen der Sackbohrungen (30) einen spitzen Winkel mit der kürzesten Verbindungslinie zwischen dem Mittelpunkt ihrer Endfläche und der Mittellängsachse des Trägerkörpers (10) bilden.

3. Fräswerkzeug nach Anspruch 1, **dadurch gekennzeichnet, daß** der Winkel zwischen den Mittellängsachsen der Sackbohrungen (30) und jeweils der kürzesten Verbindungslinie zwischen dem Mittelpunkt ihrer Endflächen und der Mittellängsachse des Trägerkörpers (10) 0° beträgt, so daß die Sackbohrungen (30) radial ausgerichtet sind, und die Grundfläche der Schneidkörper (12) als Schrägfläche mit einem dem negativen Spanwinkel entsprechenden spitzen Winkel relativ zur Oberfläche (17) der Schneidkörper (12) ausgebildet ist.

4. Fräswerkzeug nach einem der Ansprüche 1 bis 3, **dadurch gekennzeichnet, daß** die Schneidkörper (12) mit ihrer Grundfläche materialschlüssig, z. B. durch Löten oder Kleben, mit der Endfläche der Bohrungen (30) verbunden sind.

5. Fräswerkzeug nach einem der Ansprüche 1 bis 4, **dadurch gekennzeichnet, daß** der Durchmesser der Sackbohrungen (30) nur um so viel größer ist als der Umkreis der Schneidkörper (12), daß eine materialschlüssige Verbindung auch zwischen der Seitenwand (15) der Schneidkörper (12) und der Bohrungswand (30) zustande kommt.

6. Fräswerkzeug nach einem der Ansprüche 1 bis 5, **dadurch gekennzeichnet, daß** die Schneidkörper (12) aus einer die Oberfläche (17) bildenden Schicht (14) aus polykristallinem Diamant oder kubischem Bornitrid auf einer einstückig mit ihr verbundenen, die Grundfläche bildenden unteren Schicht (16) aus Hartmetall bestehen.

7. Fräswerkzeug nach einem der Ansprüche 1 bis 6, **dadurch gekennzeichnet, daß** sich die Seitenflächen (15) der Schneidkörper (12) senkrecht zur Oberfläche (17) erstrekken.

8. Fräswerkzeug nach einem der Ansprüche 1 bis 7, **dadurch gekennzeichnet, daß** der negative Spanwinkel ca. -15° bis -25°, vorzugsweise -20° beträgt.

9. Fräswerkzeug nach einem der Ansprüche 1 bis 8, **dadurch gekennzeichnet, daß** die Schneidkörper (12) in Draufsicht die Form eines Fünfecks haben und derart auf dem Umfang des Trägerkörpers (10) befestigt sind, daß sie mit einer Ecke (18) in Schneidrichtung weisen.

10. Fräswerkzeug nach einem der Ansprüche 1 bis 9, **dadurch gekennzeichnet, daß** die Schneidkörper (12) in sich achsparallel oder schräg zur Drehachse erstreckenden Reihen mit Zwischenabständen sowie in aufeinanderfolgenden Reihen auf Lücke versetzt angeordnet sind.

11. Fräswerkzeug nach einem der Ansprüche 1 bis 10, **dadurch gekennzeichnet, daß** es mit wenigstens einer stirnseitig angeordneten Bohrschneide (32) versehen ist.

## Claims

1. A rotationally drivable milling tool, having a holder body (10) which is equipped on its circumference with many platelike cutting bodies (12), comprising a cutting material harder than hard metal, in each of which bodies the leading region (18-22) of the radially outer circumferential edge forms the cutting edge, the adjoining side face (15) forms the cutting face with a negative rake angle, and the surface (17) opposite the bottom face forms the tool flank, **characterized in that** the cutting bodies (12) with their bottom face are each secured on the end face of a blind bore (30) in the circumferential surface of the holder body (10), which bores are oriented at such angle to the shortest connecting line between the center point of the end face and the center longitudinal axis of the holder body (10) that the side face (15) adjoining the cutting edge (18-22) forms the predetermined rake angle.

2. The milling tool as defined by claim 1, **characterized in that** the platelike cutting bodies (12) have the same height at every point of their bottom face, and the center longitudinal axes of the blind bores (30) form an acute angle with the respective shortest connecting line between the center point of their end face and the center longitudinal axis of the holder body (10).

3. The milling tool as defined by claim 1, **characterized in that** the angle between the center longitudinal axes of the blind bores (30) and the respective shortest connecting line between the center point of each of their end faces and the center longitudinal axis of the holder body (10) amounts to 0°, so that the blind bores (30) are oriented radially, and the bottom face of the cutting bodies (12) is embodied as an oblique face, with an acute angle relative to the surface (17) of the cutting bodies (12) corresponding to the negative rake angle.

4. The milling tool as defined by one of claims 1 through 3, **characterized in that** the cutting bodies (12) are joined in material-locking fashion, for instance by soldering or gluing, by their bottom face to the end face of the bores (30).

5. The milling tool as defined by one of claims 1 through 4, **characterized in that** the diameter of the blind bores (30) is greater than the circumference of the cutting bodies (12) by only so much that a material-locking connection comes about between the side wall (15) of the cutting bodies (12) and the bore wall (30) as well.

6. The milling tool as defined by one of claims 1 through 5, **characterized in that** the cutting bodies (12) comprise a layer (14), forming the surface (17), of polycrystalline diamond or cubic boron nitride on a lower layer (16), integrally joined to it and forming the bottom face, of hard metal.

7. The milling tool as defined by one of claims 1 through 6, **characterized in that** the side faces (15) of the cutting bodies (12) extend perpendicular to the surface (17).

8. The milling tool as defined by one of claims 1 through 7, **characterized in that** the negative rake angle amounts to approximately -15° to -25°, preferably -20°.

9. The milling tool as defined by one of claims 1 through 8, **characterized in that** the cutting bodies (12) in plan view have the form of a pentagon and are secured to the circumference of the holder body (10) in such a way that with one corner (18) they point in the cutting direction.

10. The milling tool as defined by one of claims 1 through 9, **characterized in that** the cutting bodies (12) are disposed in rows extending axially parallel or obliquely to the axis of rotation with intermediate spacings and in successive staggered rows.

11. The milling tool as defined by one of claims 1 through 10, **characterized in that** it is provided with at least one drilling cutter (32) disposed on the face end.

## Revendications

1. Outil de fraisage rotatif comportant un corps de support (10) dont la périphérie est garnie d'un ensemble d'organes de coupe (12) en forme de plaquettes, réalisés en un matériau de coupe plus dur que le métal dur, et dont la zone amont (18 - 22) de l'arête périphérique radialement extérieure forme l'arête de coupe, la surface latérale adjacente (15) forme la surface de dégagement avec un angle de dégagement négatif et la surface supérieure (17) à l'opposé de la surface de base, constitue la surface libre,
outil de fraisage **caractérisé en ce que**
les organes de coupe (12) sont fixés chacun par leur surface de base sur la surface d'extrémité de perçages borgnes (30) alignés selon un angle respectif par rapport à la ligne de jonction la plus courte entre le centre de la surface d'extrémité et l'axe longitudinal médian de l'organe de support (10), en étant fixés dans son surface périphérique, la surface latérale (15) adjacente à l'arête de coupe (18 - 22) formant l'angle de dégagement prédéfini.

2. Outil de fraisage selon la revendication 1,
**caractérisé en ce que**
les organes de coupe (12) en forme de plaquettes présentent à chaque endroit de leur surface de base, la même hauteur, et l'axe longitudinal moyen des perçages borgnes (30) forme un angle aigu avec la ligne de liaison la plus courte entre le centre de leur surface d'extrémité et l'axe longitudinal médian de l'organe de support (10).

3. Outil de fraisage selon la revendication 1,
**caractérisé en ce que**
l'angle entre l'axe longitudinal médian des perçages borgnes (30) et la ligne de liaison respective, la plus courte entre le centre de leurs surfaces d'extrémités et l'axe longitudinal médian de l'organe de support (10), est égal à 0° de sorte que les perçages borgnes (30) sont alignés radialement et la surface de base des organes de coupe (12) est réalisée comme surface inclinée ayant un angle aigu correspondant à l'angle de dégagement négatif par rapport à la surface supérieure (17) de l'organe de coupe (12).

4. Outil de fraisage selon l'une des revendications 1 à 3,
**caractérisé en ce que**
les organes de coupe (12) sont reliés par leur surface de base, par une liaison par la matière, par exemple par soudage ou collage à la surface d'extrémité des perçages (30).

5. Outil de fraisage selon l'une des revendications 1 à 4,
**caractérisé en ce que**
le diamètre des perçages borgnes (30) est seulement plus grand que le cercle enveloppe des organes de coupe (12) pour réaliser une liaison par la matière entre la paroi latérale (15) des organes de coupe (12) et la paroi (30) du perçage.

6. Outil de fraisage selon l'une des revendications 1 à 5,
**caractérisé en ce que**
les organes de coupe (12) sont constitués d'une couche (14) formant la surface supérieure (17) en diamant polycristallin ou en nitrure de bore cubique sur une couche inférieure (16) en métal dur, constituant la surface de base et reliée en une seule pièce avec la couche supérieure.

7. Outil de fraisage selon l'une des revendications 1 à 6,
**caractérisé en ce que**
les surfaces latérales (15) des organes de coupe (12) s'étendent perpendiculairement à la surface supérieure (17).

8. Outil de fraisage selon l'une des revendications 1 à 7,
**caractérisé en ce que**
l'angle de dégagement négatif, est de l'ordre de -15° à -25° et de préférence égal à -20°.

9. Outil de fraisage selon l'une des revendications 1 à 8,
**caractérisé en ce que**
en vue de dessus, les organes de coupe (12) ont une forme de pentagone et ils sont fixés à la périphérie de l'organe de support (10) de façon qu'un coin (18) soit dirigé dans la direction de coupe.

10. Outil de fraisage selon l'une des revendications 1 à 9,
**caractérisé en ce que**
les organes de coupe (12) sont répartis sur des rangées parallèles à l'axe ou inclinées par rapport à l'axe de rotation avec des intervalles et des rangées successives d'intervalles.

11. Outil de fraisage selon l'une des revendications 1 à 10,
**caractérisé en ce qu'**
il comporte au moins une arête de perçage (32) sur un côté frontal.
